# EUROPEAN PATENT APPLICATION

(11) **EP 4 539 335 A1**
(43) Date of publication of application: **16.04.2025**
(21) Application number: 24205143.1
(22) Date of filing: 08.10.2024
(51) Int. Cl.: H02S 20/26, E04B 2/88

(54) **BUILDING MODULE**

(30) Priority: 09.10.2023 IT 202300020868
(71) Applicant: Mela, Simone, 47042 Cesenatico (FC) (IT)
(72) Inventor: Mela, Simone, 47042 Cesenatico (FC) (IT)
(74) Representative: Busca, Andrea

(57) **Abstract**

The present invention concens a building module comprising at least one structural frame (5) including means of attachment (10) to the facade of a building (2) and placed to support at least:
- an insulation panel (15);
- a shading wall (20);
where
- said insulating panel (15) is supported by said structural frame (5) in a position to define a first outer face of the module;
- the at least one shading wall (20) is supported by said structural frame (5) parallel to said insulating panel (15) and distanced from it, placed to define a second outer face of the module opposite to the first face;
- the attachment means (10) are projecting outward from said first face of the module.

## Description

The present invention concerns a building module. In particular, the invention concerns a building facade cladding module. The module is particularly designed for redevelopment of existing buildings; however, its application to newly constructed buildings is not excluded.

### PRIOR ART

The field of building redevelopment includes various types of interventions, each of which is generally carried out with a wide variety of dedicated technologies.

This, however, leads to the lengthening of the execution time and an increase in costs, especially due to the coordination needed between various procedures, which were in principle not designed to coordinate. For example, it is necessary to manage the use of available space, access of the different specialized teams needed, etc. As an aggravating factor, each of these interventions brings with its necessary risk management. Finally, the quality of the intervention is given by the manual skills of the teams involved, the work still being mainly handcrafted to adapt to the particularities of each building.

For example, especially when redevelopment incentives are increasingly being granted to citizens to modernize the building stock, both thermal insulation coatings, earthquake-proof structural adjustments, installation of photovoltaic systems, renovations or installations of balconies, etc., are performed on the same pre-existing building.

Such interventions are also made particularly complex and burdensome by any peculiarities of the building, such as the flatness of the walls and the shape of the building access compartments of the building, as well as the production of dust and waste, etc.

Finally, interventions, even after their execution, may be subject to problems, such as, and now increasingly so, damage from exceptional weather events, such as hail, and may for this reason require maintenance even quite close to the end of execution.

Known in the patent literature from D1-KR102340483 is a finishing panel for cladding the walls of a building where an insulation panel is used as a base to assemble a photovoltaic panel.

However, such finishing panels are not structurally designed for use where there are balconies, the presence of which would be a hindrance to the application.

In addition, such panels are not capable of mounting a shading wall, as it would invalidate the photovoltaic effect. Even if the photovoltaic panel were put outside the shading wall, it would invalidate the ventilation effect.

Therefore, the teachings of D1-KR102340483 have clear limitations of use and pose clear diversions to certain structural modifications of the finishing panel.

The same teachings are confirmed as an industry trend by D2-CN108643422 and D3-CN212053356 where the latter also adopts a complex wall mechanism.

Also known in the patent literature is D4-KR102443129, which has lesser teachings than the previous ones, in that it proposes a solar panel with side ventilation, without even describing the presence of an insulating material behind the solar panel like the previous papers.

Therefore, this paper, too, is not suitable for the construction of insulated walls and balconies. In addition, although there is ventilation it is not suitable for cooling the wall of the house, as this effect is affected by the presence in the wall itself of the photovoltaic panel, which is known to emit heat. The lack of insulating material is a further aggravating factor of diversion.

Finally, patent document D5- KR20180053078 describes a shading wall formed directly by the PV panels, also without thermal insulation to the building wall; therefore, the feedback is the same and completes the framework of diversion permutations covered by the prior art.

The purpose of the present invention is to overcome completely in part the problems of the prior art.

A further purpose of the present invention is to enable rapid building interventions, especially redevelopment.

An additional purpose of the present invention is to enable safe building interventions, especially redevelopment, through a low level of risks.

A further purpose of the present invention is to enable building interventions, especially redevelopment, which are unexpensive to implement.

A further purpose of the present invention is to enable building interventions, especially redevelopment, which are easy to implement.

A further purpose of the present invention is to enable long-lasting building interventions, especially redevelopment.

A further purpose of the present invention is to enable building interventions, especially redevelopment, that with a single execution concentrate interventions that traditionally require several executions.

An additional purpose of the present invention is to facilitate building interventions, especially redevelopment, concerning balconies.

A further purpose of the present invention is to enable precise building interventions, especially redevelopment, especially in association with balconies.

### GENERAL INTRODUCTION

Technical problems are solved by a building module, a building kit, a building including said kit, and a building construction procedure as indicated in the attached claims.

Advantageously, the module according to the present invention insulates and ventilates the wall of a building in a single application intervention, furthermore, the arrangement of the parts lends itself to the use of balconies with the same wall insulation and ventilation operation, eliminating the need for concrete balconies and easily avoiding the creation of thermal bridges typical of balconies. Finally, the arrangement of the parts lends itself to the integration of at least one photovoltaic panel in a position that does not affect the ventilation effect or use as a balcony.

### DETAILED DESCRIPTION

Further characteristics and advantages of the present invention will best result from the following detailed description of its preferred forms of implementation, made with reference to the attached drawings and given for illustrative and non-limiting purposes. In such drawings:
- figure 1 schematically illustrates in a side view a building module, for example for redevelopment, according to the present invention and applied to the wall of a building;

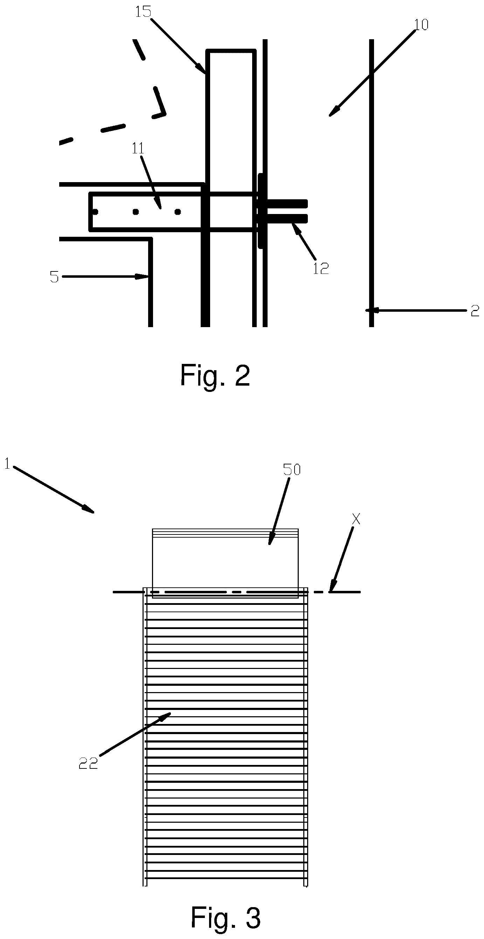

- figure 2 schematically illustrates a point of attachment of the module of the previous figure to the building wall;
- figure 3 schematically illustrates the module of figure 1 in front view;
- figure 4 schematically illustrates a series of modules of figure 3 installed side by side;
- figure 5 schematically illustrates in perspective view a variant of a module according to the present invention, particularly configured for making a balcony;
- figure 6 shows a facade of an existing building to be renovated and including a balcony;
- figure 7 shows the use of the module in figure 5 for the redevelopment of the balcony in figure 6.

In the following we describe the invention with reference to a building redevelopment function, that is, applications to existing buildings for the purpose of maintenance and improvement of energy performances. However, application to newly constructed buildings is not excluded.

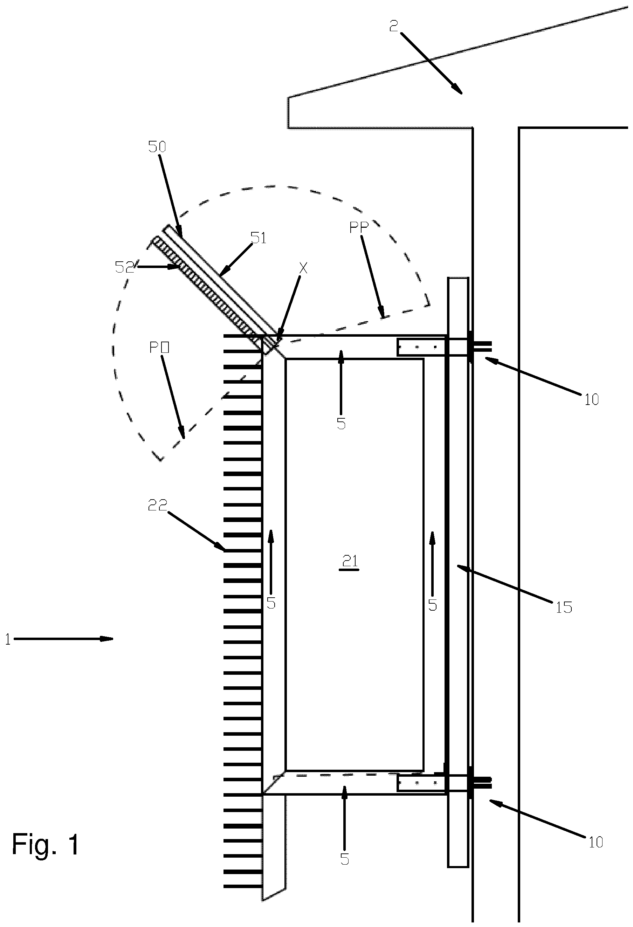

With reference to figure 1, a building module according to the present invention shown as a whole with reference number 1 is illustrated. Module 1 is applied to the exterior facade 2 of an existing building to be renovated.

Module 1 comprises:
- a structural frame 5;
- at least one insulating panel 15 supported by said structural frame 5 in a position to define a first outer face of the module;

- at least one shading wall 20 supported by said structural frame parallel to said insulating panel 15 and distanced from it, placed to define a second outer face of the module opposite to the first face;
- means of attachment 10 of the structural frame 5 to the outer face of the building 2 projecting outward from the module from said first face.

The shading wall 20 includes an empty room 21 distancing from the insulating panel 15, where the empty room is open at least on the second face.

In general, insulating panel 15 is also called thermally insulating panel because it includes thermally insulating material, for example, of the type with a thermal conductivity coefficient λ≤0.06 W/(K*m), where preferably 0.015≤λ≤0.036. Typical materials are polyurethane or polyethylene.

Preferably the panel is sandwich type.

Attachment means 10 include, for example, at least one element 11, such as a plate also known in the jargon as a "tissue," that bypasses the panel 15 to connect the structural frame 15 to dowel means 12. They preferably comprise a plurality of said handkerchiefs. For example, the tissues 11 are joinable to the frame 10 by means of screws or other stable connection after they have been attached to the building 2 by inserting the dowel means 12 into the wall of the latter.

The dowel means can be any type of device configured for wall mounting (2).

Preferably, the dimensions of module 1 and the means of attachment 10 are configured in such a way that the means of attachment 10 are connectable to the structural beams of the building, which are generally located at predefined distances from each other at the floors and slabs of the building.

For example, structural frame 10 is shaped as a prism with rectangular main facades of dimensions H*L where 180≤H≤800 cm and 80≤L≤500 cm and where preferably L=200 cm and 300≤H≤330 cm, and the tissues are preferably located substantially at the vertices of the rectangle defined by one of said facades.

The shading wall 20 preferably comprises a series of slats 22 supported by the structural frame distances from each other so as to shade the insulating panel 15 and define the empty room 21. The shading wall is preferably a ventilated wall, that is, with an air circulation effect called the "chimney effect."

The structural frame 10 preferably comprises a plurality of stringers and cross-pieces arranged to define the edges of a prism around the empty room 21.

Module 1 optionally may include at least one solar panel 50. A solar panel is preferably understood to be a photovoltaic-panel, however, it does not exclude a panel for water heating or generally for any use of solar energy. Thus, it is generally understood that solar panel 50 has an operating face 51 through which it interacts with solar radiation. Preferably, the solar panel 50 is movable relative to the frame so that it can be arranged in at least two different orientations.

For example, as best seen in figure 1, the two orientations include an operational PO configuration, in which operational face 51, e.g., the PV surface, is exposed to the sun, and a protective PP configuration in which operational face 51 is protected. For example, in the operational configuration, panel 52 is projecting into an area in front of the shading wall, while in the protective configuration it is recumbent above it.

It is also possible to provide at least two different operational orientations to be taken at different times of the day or periods of the year, it is also possible to provide more than two orientations.

To realize the transition between orientations, the solar panel 50 preferably includes a rotational movement about an X-axis located substantially at and parallel to an edge of the structural frame 15, proximal to the second facade. Preferably, such a solar panel 50 is at the top of the module 1.

In this way, the solar panel 50 in at least one operating configuration can be found projecting outward above the shading wall 20 so that additional shading is generated.

Panel 50 may include means of hail protection 52 such as a protective wall, e.g., a grid, placed on the side opposite that of the operating face 51.

Hail protection means 52 can also be useful in the absence of solar panel 50, as they still protect the wall of building 2 or parts of module 1 when in the PP protective position. In the latter case, hail protection means 52 can be either movable between the PO and PP configuration or fixed with respect to the structural frame. In general, preferably hail protection means 52 are preferably placed at least at the top of the structural frame.

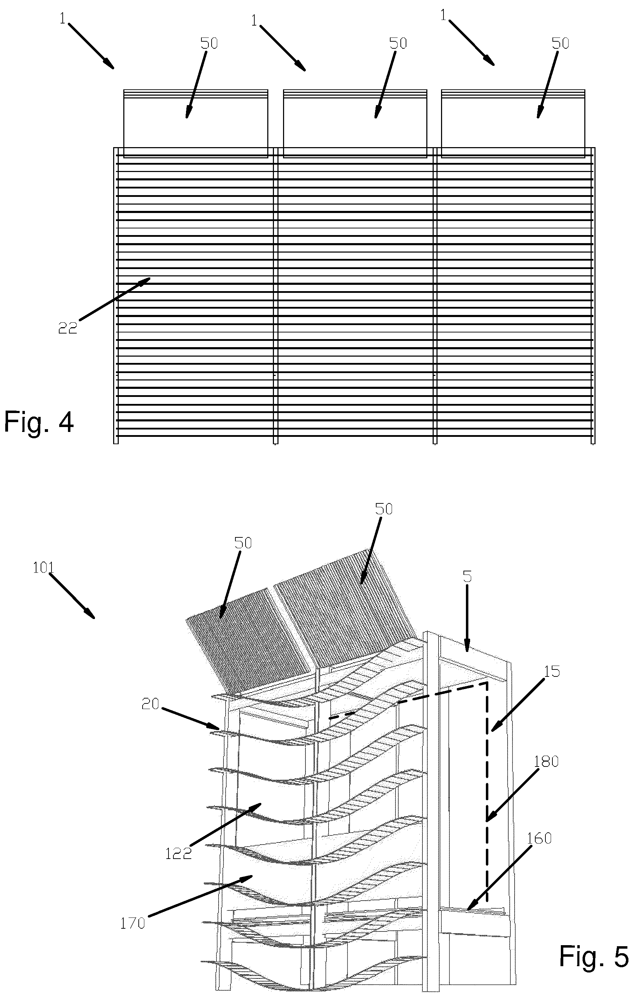

A building module variant shown as a whole with reference number 101 is shown in figure 5. It differs from module 1 described above in that it is configured for the construction of a balcony and is therefore also called a "balcony module." In contrast, module 1 is configured for cladding a wall area of a building without balconies, such as an area adjacent to a balcony, so it is also called a "cladding module."

For this purpose, the balcony module 101 includes a floor 160 interposed between the insulating panel 15 and the shading wall 20, for example supported by the structural frame 5. In addition, balcony module 101 may include a parapet 170.

Preferably, the insulating panel 15 of balcony module 101 comprises at least one through opening 180, indicated by the dashed line in figure 5, configured for access to a building door.

For example, said through opening 180 is configured based on a survey of a predetermined room in the building, the room being configured to house said door.

The invention also covers a building kit comprising a plurality of modules described above, preferably at least one balcony module 1 and at least one cladding module 101 different from each other.

The invention also concerns a building to the walls of which said building kit is applied.

Module 101 also indicates the general possibility of adopting any shading wall aesthetic 20, for this purpose it shows as a general example the aesthetic donated by the shape of the slats 122, which are wavy.

In use, a first module 1 or 101 is applied to facade 2 of the building to be renovated, with the insulating panel 15 proximal to said facade 2 and the shading wall 20 distal. Module 1 or 101 is oriented so that the eventual solar panel 50 is at its top.

For example, the installation may involve coupling tissues 11 to facade 2 and then coupling module 1 or 101 to the tissues.

Then the operation can be repeated to install a plurality of modules 1 or 101 paired together.

In cases where the building to be renovated includes one or more balconies, it is preferable to preliminarily demolish them completely and cover them with modules 1 or 101.

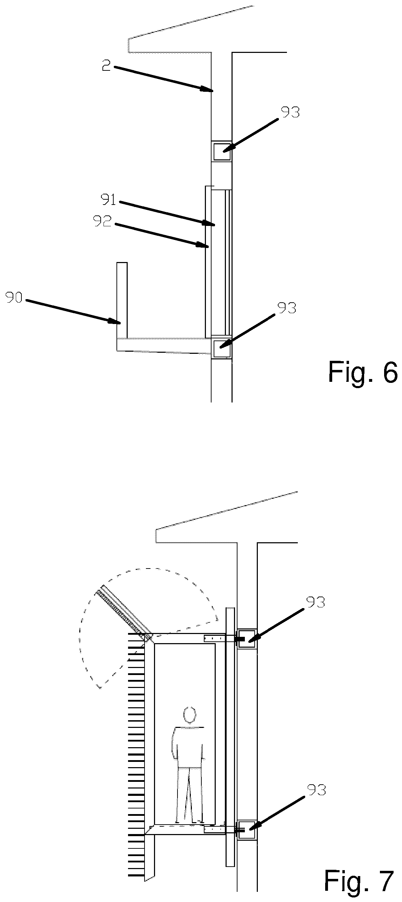

Figures 6 and 7 show some stages of renovating an existing building with a balcony.

In particular, figure 6 shows the exterior facade 2 of a building in a configuration prior to redevelopment, in which the facade includes a balcony 90.

The facade also includes a compartment 91 containing a door for balcony access.

The process of renovating the exterior facade 2 includes the following steps:
- apply a closure 92 to compartment 91 to prevent the passage of people; a preferred example of a closure 92 is a grille;
- demolish balcony 90;
- apply balcony module 101 to the area where balcony 90 was demolished.

For example, panel 15 is on the top of the area where the demolished balcony was attached to facade 2.

Notoriously, balconies are very complex points to renovate, especially from the point of view of thermal bridging. Thanks to the present invention, balconies can be renovated by simplifying the manual insulation procedure to avoid thermal bridges, since the balcony is totally outside the panel 15, and insulated from it with respect to the facade 2 of the building, consequently it does not constitute a thermal bridge.

Preferably said process of renovating a balcony also includes the following steps:
- scan compartment 92
- realize the opening 180 of panel 15 based on said scan, for example, to realize a size match between compartment 92 and opening 180.

This advantageously allows to consider building dissimilarities in room squaring.

Preferably at a stage following the application of module 101, insulating material (not shown) is applied to the delimiting walls of compartment 92.

The balcony module 101 preferably is anchored to the beams 93 of the building slabs.

Advantageously, no further work, such as plastering or painting, is required after the installation of modules 1 or 101, as they already include a finishing aesthetic, thanks to shading wall 20 and insulating panel 15. The latter, for example, may include a sandwich panel, which may have a surface finishing layer, such as a layer of a color that can be customized at the time of order.

Advantageously, only one renovation intervention is required, which simultaneously fulfills thermal insulation, ventilation and shading of the building facade, its finishing, installation of a photovoltaic system, earthquake proof renovation (thanks to structural frame 15), and possible treatment of balconies.

Therefore, the execution time is quick, the execution is low risk both environmentally (no dust or anything else) and physically (no multiple teams alternating or overlapping with each other in prolonged interventions).

The building is returned to its use quickly.

Extensive work areas around the building are not required to coordinate the various works and allow the various materials to be laid down before use.

Advantageously, the building renovation carried out thanks to these modules is more durable than traditional interventions, for example, because the use of plaster can be avoided, the insulating panels are protected by the shading wall from both the sun and shocks, and the modules can be solidly anchored to the load-bearing parts of the building and not simply glued to a mere plaster as with traditional panels.

It is noted that although module 1 has been illustrated as a pre-assembled device ready for installation, it is also particularly advantageous when made as an apparatus, such as in the form of an assembly kit, to be partially assembled on site.

In such a case, for example, module 1 made in the form of an apparatus could include at least one among the insulating panel 15, the shading wall 20, and the solar panel 50 separated from the structural frame 5, and coupled to it, e.g., by interlocking or other means of attachment.

This simplifies installation, making the device lighter and more convenient to handle.

It will be noted that advantageously, sandwich panel 15 also serves as a finishing panel. In some variants not shown, it is possible to provide for the module to include a finishing layer overlapped on the insulating panel. For example, the finishing layer can easily be made in the form of a panel, such as sheet metal, polymeric material, or composite material.

### GENERAL MEANING OF TERMS

In understanding the purpose of the present invention, the term "comprising" and its derivatives, as used herein, are intended as open-ended terms specifying the presence of the declared characteristics, elements, components, groups, integers and/or phases, but not excluding the presence of other undeclared characteristics, elements, components, groups, integers and/or phases. The above also applies to words with similar meanings such as the terms "including", "having" and their derivatives. In addition, the terms "part", "section", "portion", "member" or "element" when used in the singular may have the dual meaning of a single part or a plurality of parts. As used herein to describe the form(s) of implementation mentioned above, the following directional terms "forward", "backward", "above", "below", "vertical", "horizontal", "underneath" and "transverse", as well as any other similar directional terms refer to the form of implementation described in the operative position. Finally, grade terms such as "substantially", "about" and "approximately" as used herein mean a reasonable amount of deviation of the modified term such that the end result is not significantly changed.

While only selected implementation forms have been chosen to illustrate the present invention, from this description it will be clear to those expert in the field that various modifications and variations may be made without departing from the purpose of the invention as defined in the attached claims. For example, the size, shape, position or orientation of the various components may be modified as needed and/or desired. Components shown directly connected or in contact with each other may have intermediate structures interposed between them. The functions of one element can be performed by two and vice versa. The structures and functions of one form of implementation can be adopted in another one. It is not necessary that all advantages are present in a particular form of implementation at the same time. Each characteristic that is original compared to the prior art, alone or in combination with other characteristics, should also be considered a separate description of further inventions by the applicant, including structural and/or functional concepts incorporated by those characteristics. Therefore, the previous descriptions of implementation forms according to the present invention are provided for illustrative purposes only and not for the purpose of limiting the invention as defined by the attached claims and their equivalents.

## Claims

1. Building module comprising at least one structural frame (5) including means of attachment (10) to the facade of a building (2) and placed to support at least:
- an insulation panel (15);
- a shading wall (20);
where
- said insulating panel (15) is supported by said structural frame (5) in a position to define a first outer face of the module;
- the at least one shading wall (20) is supported by said structural frame (5) parallel to said insulating panel (15) and distanced from it, placed to define a second outer face of the module opposite to the first face;
- the attachment means (10) are projecting outward from said first face of the module.

2. Module according to claim 1, **characterized by** the fact that it is a module configured to build a balcony, where the module comprises for this purpose a floor (160) interposed between the insulation panel (15) and the shading wall (20).

3. Module according to claim 2, **characterized by** the fact that the insulation panel (15) comprises at least one through opening (180) configured to access a door (90) of a building.

4. Module according to claim 3, **characterized by** the fact that said through opening is configured based on a survey of a predetermined room (92) of the building, the room being configured to house said door.

5. Module according to any of previous clais, **characterized by** the fact that it comprises:
- a supported solar panel projecting from said second face to an upper end of the shading wall (20) ;

6. Module according to claim 5, **characterized by** the fact that said solar panel (50) is movably supported at said upper end so that it comprises:
- an operative position (PO) projecting into an area frontal to said second face, with an inclined orientation with respect to said face, and
- a protective position (PP) in which it is reclined above the shading wall (20)

7. Module according to claim 6, **characterized by** the fact that said solar panel includes an operational face (51) and a face opposite the operational face, where on said opposite face there are means of hail protection;
the operational face (51) being exposed outside the module in said operational configuration, and the hail protection means (52) being exposed outside the module in said protective configuration.

8. Module according to any of the previous claims, **characterized by** the fact that the insulation panel (15) includes or is coupled to a surface finish layer configured to define a surface finish of a wall of a building.

9. Module according to any of the previous claims, **characterized by** the fact that the attachment means (10) comprise at least one bypass element (11) that bypasses the insulation panel (15) to connect the structural frame (15) to dowel means (12), wherein the attachment means (10) comprise a plurality of said bypass elements, which are joinable to the structural frame (15) by means of screws or other stable connection after they have been attached to the facade of a building (2), where preferably the dimensions of the module (1) and the means of attachment (10) are configured such that the means of attachment (10) are distanced from each other of the standard distances between the structural beams of a building.

10. A building kit comprising a plurality of modules according to any of the previous claims, **characterized by** the fact that it comprises at least two of said modules different from each other wherein at least one is configured for the construction of a balcony, and is called for simplicity "balcony module" (101), and the other is configured for the cladding of a wall area of a building without balconies, and is called for simplicity "cladding module" (1).

11. Building at least partially clad with the kit according to the previous claim, where the balcony module (101) is placed to build a balcony, and the cladding module (1) is placed to realize the cladding of a wall area without balconies.

12. Building construction procedure including the step of applying to the facade of a building (2) a module according to any claim from1 to 11.

13. Process according to claim 12, **characterized by** the fact that it is a process of making or renovating a balcony, including the step of applying a module according to claim 2 or a dependent thereof.

14. Process according to claim 13, **characterized by** the following steps:
- make a survey of at least one room in the building configured to access a balcony;
- build said module using an insulating board (15) including a through opening made according to said survey;
- apply the module to the building by aligning said room with said through opening.

15. Process according to claim 13 or 14, **characterized by** the fact that it is a balcony renovation procedure comprising the following steps:
- demolition of an existing balcony of the building;
- application of said module to said building in place of the demolished balcony by superimposing the panel (15) of the module to the area where the demolished balcony was attached to the building.
